# EUROPÄISCHE PATENTSCHRIFT

(11) **EP 2 433 783 B1**
(45) Veröffentlichungstag und Bekanntmachung des Hinweises auf die Patenterteilung: **22.08.2018**
(21) Anmeldenummer: 11007753.4
(22) Anmeldetag: 23.09.2011
(51) Int. Cl.: B29C 70/38, B29C 33/26, B29C 70/32, B29L 31/30

(54) **Legemaschine und Verfahren für die Fertigung eines Werkstücks aus Verbundmaterial**
Lay-up apparatus and method for producing a workpiece made of composite material
Machine de drapage et méthode pour la fabrication d'une pièce en matériau composite

(30) Priorität: 27.09.2010 DE 102010046570
(43) Veröffentlichungstag der Anmeldung: 28.03.2012
(73) Patentinhaber: Aumann Beelen GmbH, 48361 Beelen (DE)
(72) Erfinder: Düker, Martin, 33334 Gütersloh (DE); Bühlmeyer, Robert, 33442 Herzebrock-Clarholz (DE)
(74) Vertreter: Bittner, Thomas L.

(56) Entgegenhaltungen:
- WO-A1-00/61464
- WO-A1-2005/018918
- CH-A5- 632 181
- US-A- 3 783 060
- US-A1- 2005 039 844

## Beschreibung

Aus WO2005/018918 ist eine Legemaschine bekannt, die eine Hohlform und wenigstens einen Legekopf umfasst, der in der Hohlform bewegbar ist, um eine Innenfläche derselben mit einem Materialband auszulegen und so ein Rohwerkstück zu formen. Indem die Hohlform mit dem Rohwerkstück darin erhitzt wird, wird ein in dem Rohwerkstück enthaltenes Harzmaterial zum Schmelzen gebracht, und die übereinander gelegten Lagen des Materialbands verschmelzen miteinander.

Um eine innige Verschmelzung von übereinander gelegten Schichten des Materialbandes zu erzielen, ist es bekannt, ein durch Wickeln von Materialband um einen Dorn erhaltenes Rohwerkstück mit einer Folie zu überziehen, und die Hohlräume zwischen den Lagen des Materialbands zu evakuieren, so dass diese unter einem von außen auf die Folie einwirkenden Luftdruck fest gegeneinander gepresst werden.

Wenn bei dem Versuch, das an der Innenfläche der Hohlform gemäß WO2005/018918 gebildete Rohwerkstück in entsprechender Weise zu verdichten, das Rohwerkstück mitsamt der Hohlform in eine Vakuumkammer verbracht werden muss, so wird eine Kammer von großen Abmessungen benötigt, die dementsprechend teuer ist. Wirtschaftlicher ist es, wenn die Hohlform selber wenigstens einen Teil der benötigten Vakuumkammer bilden kann. Dabei ergibt sich jedoch das Problem, dass eine solche Hohlform, um die erforderliche Formbeständigkeit aufzuweisen, vorzugsweise aus Stahl gefertigt sein sollte, dass aber eine stählerne Hohlform im allgemeinen einen größeren Wärmeausdehnungskoeffizienten aufweist als ein darin geformtes Werkstück aus Verbundmaterial. Das heißt, wenn die Hohlform nach dem Aushärten des Werkstücks auskühlt, schrumpft sie schneller als das Werkstück selber, und es besteht die Gefahr, dass das Werkstück unter dem Druck der Hohlform kollabiert, sofern nicht eine geeignete Kegelform des Werkstücks dafür sorgt, dass dieses beim Auskühlen dem Druck der es umgebenden Hohlform durch eine axiale Bewegung ausweicht.

Doch selbst wenn eine Zerstörung des Werkstücks durch die sich abkühlende Hohlform vermieden werden kann, ergibt sich das Problem, dass für den Betrieb der herkömmlichen Legemaschine viel Platz erforderlich ist, da zum Entformen eines Werkstücks dieses in axialer Richtung aus der Hohlform herausgezogen werden muss. Infolge dessen entspricht der Platzbedarf der herkömmlichen Legemaschine wenigstens der zweifachen Länge ihrer Hohlform.

In dem Dokument US 3,783,060 ist eine Legemaschine für die Fertigung eines Werkstücks aus Verbundmaterial offenbart, die eine Hohlform und zum Auslegen einer Innenfläche der Hohlform mit einem Material einen bewegbaren Legekopf aufweist. Die Hohlform verfügt über drei Teilschalen, wobei zwei Teilschalen gelenkig miteinander verbunden sind, sodass diese zwischen einer ersten Stellung, in der Innenfläche der Teilschalen dicht aneinander anschließen, und einer zweiten Stellung bewegbar sind, in der die Innenflächen der Teilschalen getrennt sind. Weiterhin sind die Teilschalen mittels Schließwerkzeugen verbunden.

Im Dokument WO 00/61464 A1 ist ein Verfahren zum Herstellen eines rohrförmigen Werkstücks aus Verbundmaterial beschrieben.

Aufgabe der vorliegenden Erfindung ist, eine Legemaschine für die Fertigung eines Werkstücks aus Verbundmaterial zu schaffen, bei dem eine Beschädigung der Werkstücke beim Abkühlen in der Hohlform zuverlässig vermieden werden kann.

Die Aufgabe wird gelöst, indem bei einer Legemaschine mit einer Hohlform und wenigstens einem in der Hohlform zum Auslegen einer Innenfläche der Hohlform mit einem Materialband bewegbaren Legekopf die Hohlform wenigstens drei Teilschalen umfasst, die zwischen einer ersten Stellung, in der Innenflächen der Teilschalen dicht aneinander anschließen, und einer zweiten Stellung, in der die Innenflächen von wenigstens zwei der Teilschalen durch einen Spalt getrennt sind, bewegbar sind. Indem diese Hohlform zum Abkühlen in die zweite Stellung gebracht wird, kann eine Kompression des Werkstücks durch die bei Abkühlung schrumpfende Hohlform vermieden werden.

Um den Aufbau der Legemaschine einfach zu halten, sind die wenigstens zwei bewegbaren Teilschalen mit wenigstens einer weiteren der Teilschalen schwenkbar verbunden.

Vorzugsweise sind beide bewegbaren Teilschalen mit entgegen gesetzten Rändern einer gleichen weiteren Teilschale schwenkbar verbunden, das heißt die Zahl der Teilschalen ist insgesamt genau drei.

Zweckmäßigerweise sind die wenigstens zwei bewegbaren Teilschalen zueinander über die zweite Stellung hinaus in eine Freigabestellung bewegbar, in der ein durch das Auslegen mit Verbundmaterial erhaltenes Werkstück aus der Hohlform obenseitig entnehmbar ist. So entfällt die Notwendigkeit, das Werkstück zunächst in axialer Richtung aus der Hohlform herauszuziehen, was den Platzbedarf für den Betrieb der Legemaschine erheblich reduziert.

Die wenigstens eine weitere Teilschale bildet vorzugsweise einen unteren Bereich der Hohlform, so dass es das Werkstück gleichbleibend unterstützen und das Werkstück in Ruhe halten kann, wenn die zwei bewegbaren Teilschalen zwischen der ersten und der zweiten Stellung bewegt werden.

Um eine bequeme Entnahme des fertigen Werkstücks zu ermöglichen, bilden die wenigstens zwei bewegbaren Teilschalen vorzugsweise einen oberen Bereich der Hohlform und sind mit der wenigstens einen weiteren Teilschale unterhalb einer Ebene größter Querausdehnung der Hohlform verbunden.

Um zu vermeiden, dass das Werkstück zwischen einander gegenüber liegenden Innenflächenbereichen einer gleichen Teilschale gestaucht wird, sollten die Oberflächennormalen von zwei beliebigen Punkten der Innenfläche einer jeden Teilschale einen Winkel von weniger als 180°, vorzugsweise weniger als 150°, aufspannen. Wenn die Hohlform drei gleiche Teilschalen umfasst, misst der aufgespannte Winkel maximal 120°.

Damit die Teilschalen als Wände eines Vakuumbehälters brauchbar sind, sollte zwischen dicht aneinander anschließenden Teilschalen zweckmäßigerweise ein elastisches Dichtband vorgesehen sein.

Um von den außen einwirkenden Luftdruck abzufangen, weisen die Teilschalen zweckmäßigerweise einander paarweise gegenüberliegende Flansche auf. Um diese Flansche dazu zu bringen, fest gegeneinander zu drücken und aneinander abzudichten, noch bevor mit dem Erzeugen eines Unterdrucks in der Hohlform begonnen wird, ist es nützlich, wenn je zwei dieser sich paarweise gegenüberliegenden Flansche zwischen sich wenigstens eine evakuierbare Kammer begrenzen.

Die Kammer kann des weiteren durch das elastische Dichtband begrenzt sein.

Um zum Verlegen des Materialbandes Hohlform und Legekopf gegeneinander zu bewegen, ist vorzugsweise wenigstens eines von beiden entlang einer Achse verschiebbar und/oder um die Achse drehbar. Um eine hohe Verlegegeschwindigkeit zu erreichen, kann es zweckmäßig sein, dass Hohlform und Legekopf beide entlang der Achse in entgegengesetzte Richtungen verschiebbar und/oder um die Achse in entgegengesetzten Richtungen drehbar sind.

Um die Hohlform während des Auslegens mit dem Materialband zu rotieren, ist es zweckmäßig, dass die Hohlform wenigstens zwei zueinander koaxiale Laufringe aufweist, die auf Laufrollen eines Trägers drehbar getragen sind.

Damit die Laufringe das Öffnen der Form nicht verhindern, ist jeder Laufring zweckmäßigerweise in Abschnitte gegliedert, die jeweils Bestandteile der einzelnen Teilformen sind.

Um eine kontinuierliche und erschütterungsfreie Drehung der Hohlform beim Auslegen mit dem Materialband zu ermöglichen, sollten die einzelnen Abschnitte sich in der geschlossenen Stellung der Hohlform zu einem in Umfangsrichtung lückenlosen Laufring ergänzen. Damit die Abschnitte der Laufringe beim Schwenken der Teilformen gegeneinander nicht kollidieren und sich gegenseitig blockieren, sind die Abschnitte jedes Laufrings zweckmäßigerweise wenigstens an ihren Enden axial gegeneinander versetzt.

Um die zweite Stellung eindeutig festzulegen, kann ein Träger, auf dem die Hohlform ruht, mit Anschlägen versehen sein, an denen die wenigstens zwei bewegbaren Teilschalen in ihrer zweiten Stellung anliegen.

Um ein Öffnen der Hohlform über die zweite Stellung hinaus zu ermöglichen, sind diese Anschläge vorzugsweise bewegbar oder abnehmbar.

Um die Teilschalen in ihrer ersten Stellung zu fixieren, sind mehrere Schließwerkzeuge vorhanden, die wenigstens in der ersten Stellung einander zugewandte Ränder der bewegbaren Teilschalen überbrücken um die Ränder in Kontakt miteinander zu halten.

Ein solches Schließwerkzeug umfasst eine Klaue, die an der einen beweglichen Teilschale in Umfangsrichtung der Hohlform verstellbar ist und in der ersten Stellung gegen eine von der einen beweglichen Teilschale abgewandte Oberfläche der anderen beweglichen Teilschale drückt, um beide aneinander zu fixieren, wohingegen sie in der zweiten Stellung durch Anliegen an einer der einen beweglichen Teilschale zugewandten Oberfläche der anderen beweglichen Teilschale beide in einem definierten Abstand voneinander hält. Die entlang der einander zugewandten Ränder der zwei beweglichen Teilschalen verteilten derartigen Schließwerkzeuge sind über eine Spindel gekoppelt verstellbar. Die Schließwerkzeuge sollten gegen eine zum Aushärten des Werkstücks erforderliche hohe Temperatur beständig sein, zum einen in dem Sinne, dass ihre Bewegbarkeit auch bei der hohen Temperatur gegeben ist, zum andern in dem Sinne, dass sie kräftig genug sind, um in der ersten Stellung trotz eventueller thermisch induzierter, insbesondere auf unterschiedliche thermische Ausdehnungskoeffizienten des Werkstücks und der Hohlform zurückgehender Spannungen einen dichten Kontakt zwischen den Teilschalen des Paars aufrecht zu erhalten.

Gegenstand der Erfindung ist ferner ein Verfahren zum Fertigen eines Werkstücks aus Verbundmaterial unter Verwendung einer Hohlform mit wenigstens drei Teilschalen, die zwischen einer ersten Stellung, in der Innenflächen der Teilschalen dicht aneinander anschließen, und einer zweiten Stellung, in der die Innenflächen von wenigstens zwei der Teilschalen durch einen Spalt getrennt sind, bewegbar sind, mit den Schritten:
- Auslegen einer Innenfläche der in der ersten Stellung befindlichen Hohlform mit wenigstens einem Materialband, um ein Rohwerkstück zu erhalten;
- Aushärten des Rohwerkstücks durch Erhitzen in der Hohlform; und
- Abkühlen des Rohwerkstücks, während sich die Hohlform in der zweiten Stellung befindet.

Das Aushärten sollte unter Vakuum stattfinden, damit ein von Luftblasen und anderen strukturschwächenden Inhomogenitäten freies Werkstück erhalten wird.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine perspektivische Ansicht einer erfindungsgemäßen Legemaschine;
- Fig. 2: einen schematischen Axialschnitt durch die Legemaschine;
- Fig. 3: eine Draufsicht auf einander berührende Randflansche von Teilformen der Legemaschine;
- Fig. 4: einen axialen Schnitt durch die Legemaschine während des Aushärtens eines Werkstücks;
- Fig. 5: einen zur Fig. 4 analogen axialen Schnitt durch die Legemaschine während des Abkühlens des Werkstücks; und
- Fig. 6: einen zur Fig. 4 analogen Schnitt nach dem Abkühlen des Werkstücks;
- Fig. 7: ein Detail eines Laufrings der Hohlform;
- Fig. 8: eine perspektivische Ansicht von Schließwerkzeugen der Hohlform in geschlossener und verriegelter Stellung;
- Fig. 9: eine Ansicht eines Schließwerkzeug aus anderer Perspektive; und
- Fig. 10: eine Ansicht der Schließwerkzeuge in teiloffener Stellung.

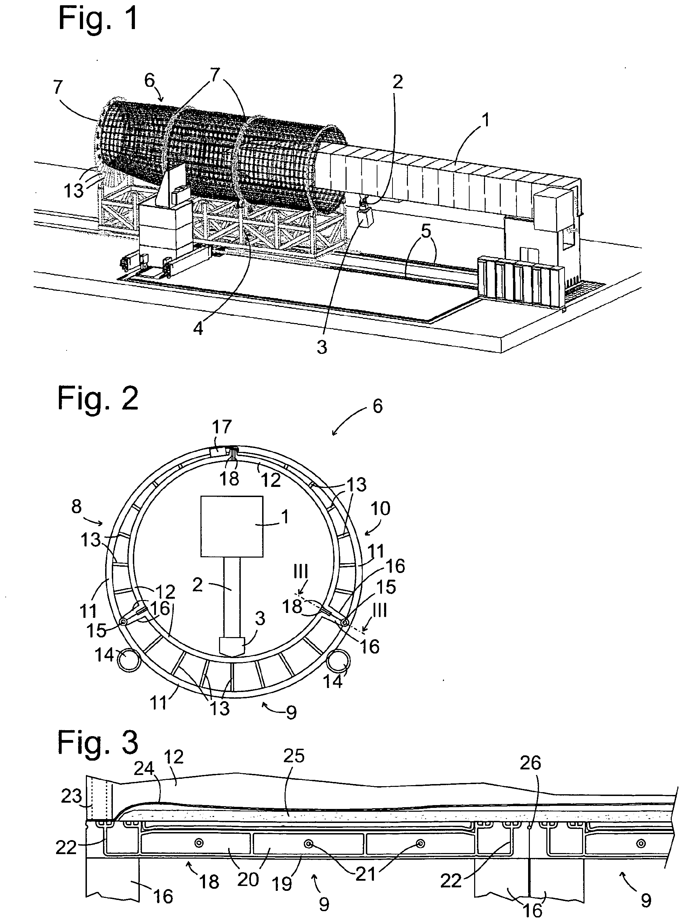

Die in Fig. 1 gezeigte Legemaschine umfasst einen langgestreckten Trägerbalken 1, von dem nach unten ein Arm 2 ausgeht, der an seinem unteren Ende einen Legekopf 3 trägt. Der Legekopf 3 ist in Bezug auf den Trägerbalken 1 vertikal bewegbar und in zwei Freiheitsgraden drehbar.

Unterhalb des Trägerbalkens 1 ist ein Drehgestell 4 auf zum Trägerbalken 1 parallelen Schienen 5 verfahrbar. Das Drehgestell 4 trägt eine Hohlform 6. Die Hohlform 6 ist durch Laufringe 7 in axialer Richtung unterteilt, hier in drei Abschnitte. Die Zahl der Abschnitte ist je nach Länge des zu fertigenden Werkstücks variabel.

Der Trägerbalken 1 greift in den inneren Hohlraum der Hohlform 6 ein. Der innere Hohlraum ist in etwa zylinderförmig und zu einem Ende hin leicht kegelförmig asymmetrisch verjüngt. Die Hohlform 6 mit einer Länge von mehreren Metern kann zur Fertigung eines Teils eines Flugzeugrumpfs, hier eines sich zwischen den Tragflächen und der Wurzel der Heckflosse erstreckenden hinteren Rumpfabschnitts, dienen.

Die Hohlform 6 ist in Umfangsrichtung in drei Teilschalen 8, 9, 10 gegliedert, wie besser anhand der Ansicht der Fig. 2 zu erkennen. Jede Teilschale 8, 9, 10 umfasst einen 120°-Sektor 11 von jedem Laufring 7, eine Wandplatte 12, die sich jeweils über etwa ein Drittel des Umfangs des zu fertigenden Flugzeugrumpfabschnitts erstreckt, sowie eine Mehrzahl von Streben 13, die sich zwischen den Wandplatten 12 und den zugehörigen Sektoren 11 erstrecken, die Teilschalen 8, 9, 10 versteifen und eine eventuelle Exzentrizität der Wandplatten 12 gegenüber den Laufringen 7 ausgleichen.

Die Teilschale 9 ist mit den beiden ihr benachbarten Teilschalen 8, 10 jeweils über ein Scharnier 15 verbunden, dessen Schwenkachse parallel zur Drehachse der Laufringe 7 nahe an deren äußerer Umfangsfläche verläuft. Radial orientierte Arme 16 überbrücken jeweils den Abstand zwischen den einander gegenüber liegenden Rändern der Wandplatten 12 der Teilschalen 8, 9 beziehungsweise 9, 10 und den sie verbindenden Scharnieren 15. Die von der Teilschale 9 abgewandten Ränder der Teilschalen 8, 10 sind durch ein lösbares Schließwerkzeug 17 aneinander gedrückt gehalten.)

Die Ansicht der Fig. 2 zeigt ferner Rollen 14 des Drehgestells 4, die jeweils paarweise angeordnet sind, um jeweils einen der Laufringe 7 zu unterstützen. Von den zwei Rollen 14 jedes Paars ist jeweils wenigstens eine drehantreibbar, um die Hohlform 6 um die gemeinsame Achse der Laufringe 7 zu drehen.

Wenn die Hohlform 6 gedreht wird, überstreicht der Legekopf 3 die Innenflächen der Wandplatten 12, um diese mit einem in Fig. 2 nicht gezeigten faserhaltigen Materialband auszukleiden. Das Verhältnis zwischen Drehgeschwindigkeit der Hohlform 6 und der Geschwindigkeit einer Bewegung des Legekopfs 3 in Längsrichtung des Trägerbalkens 1 bestimmt die Orientierung des verlegten Materialbandes. Durch eine kontinuierliche Auf- und Abwärtsbewegung des Legekopfs 3 kann die Exzentrizität der Wandplatten 12 in Bezug auf die Drehachse der Laufringe 7 ausgeglichen werden, so dass der Legekopf beim Legen des Materialbandes ständig in Kontakt mit einer der Wandplatten 12 ist.

Anstatt die Hohlform 6 um die Achse der Laufringe 7 zu drehen, wäre es selbstverständlich auch möglich, den Trägerbalken 1 um seine Längsachse rotieren zu lassen, um das Faserband über den Umfang der Hohlform 6 zu verteilen. Vorteilhaft, insbesondere bei hoher Verlegegeschwindigkeit, ist, dass eine Unwucht der Hohlform 6 keinen Einfluss auf das Verlegeergebnis hat. Die Drehung der Hohlform 6 bei gleichbleibender Orientierung des Arms 2 hat jedoch den Vorteil, dass die Andrückkraft, die der Legekopf 3 beim Verlegen des Bandes auf die Wandplatten 12 ausübt, leichter konstant zu halten ist. Um die Verlegegeschwindigkeit zu maximieren, kommt in Betracht, die Hohlform 6 und den Trägerbalken 1 in jeweils entgegen gesetzte Richtungen drehanzutreiben.

Fig. 3 zeigt in einem Schnitt entlang der mit III-III bezeichneten Linie der Fig. 2 einen Flansch 18, der einen der Teilschale 10 zugewandten Rand der Teilschale 9 bildet. Dieser Flansch 18 und ein ihm gegenüber liegender komplementärer Flansch 18 der Teilschale 10 sind mit zueinander kongruenten Rillen versehen, die eine Dichtung 19 aufnehmen. Die Dichtung 19 begrenzt zwischen den Flanschen 18 mehrere Hohlräume 20, die jeweils über in sie einmündende Saugleitungen 21 evakuierbar sind und so für eine feste, luftdichte Pressung der Dichtung 19 sorgen. Arme 22 der Dichtung 19 münden jeweils benachbart zu den Schmalseiten des Flansches 18 auf der Innenfläche der Wandplatte 12. An der linken Seite des Flansches 18 in Fig. 3 schließt dieser Arm 22 dicht an ein Klebeband 23 an, das sich umlaufend über die Randplatten 12 aller drei Teilschalen 8, 9, 10 erstreckt und eine schlauchförmige Folie 24 luftdicht fixiert. An einer rechten Seite des Flansches 18 überdeckt ein durch das Legen des Faserbandes erhaltenes Rohwerkstück 25 den Arm 22 der Dichtung 19, und eine in Umfangsrichtung umlaufende Ringdichtung 26 stellt eine luftdichte Verbindung zu einer in axialer Richtung anschließenden weiteren Teilschale 9 her.

Indem entsprechende Dichtungen 19 auch zwischen einander berührenden Flanschen 18 der Teilschalen 8, 9 bzw. 8, 10 angeordnet sind und der Folienschlauch 24 an einem in Fig. 3 nicht dargestellten entgegengesetzten axialen Ende in der oben beschriebenen Weise über ein weiteres Klebeband 23 fixiert ist, bilden die Wandplatten 12 und die Folie 24 eine luftdichte Hülle, die das Rohwerkstück 25 vollständig einschließt.

Das Materialband, aus dem das Rohwerkstück 25 kann bereits zur Zeit des Legens mit einem durch Hitze aktivierbaren Kunstharzmaterial imprägniert sein. Dann genügt es, dass von der Folie 24 und den Wandplatten 12 begrenzte Volumen zu evakuieren und das Rohwerkstück 25 zu erhitzen, damit dessen Fasern von dem von innen gegen die Folie 24 wirkenden Luftdruck gegen die Wandplatten 12 gepresst und mit dem imprägnierenden Kunstharzmaterial verpresst werden. Falls das verlegte Faserband nicht in dieser Weise vorimprägniert ist, kann ein geeignetes Kunstharzmaterial während des Evakuierens bei hoher Temperatur eingespritzt werden, um die Fasern fest miteinander zu verbinden.

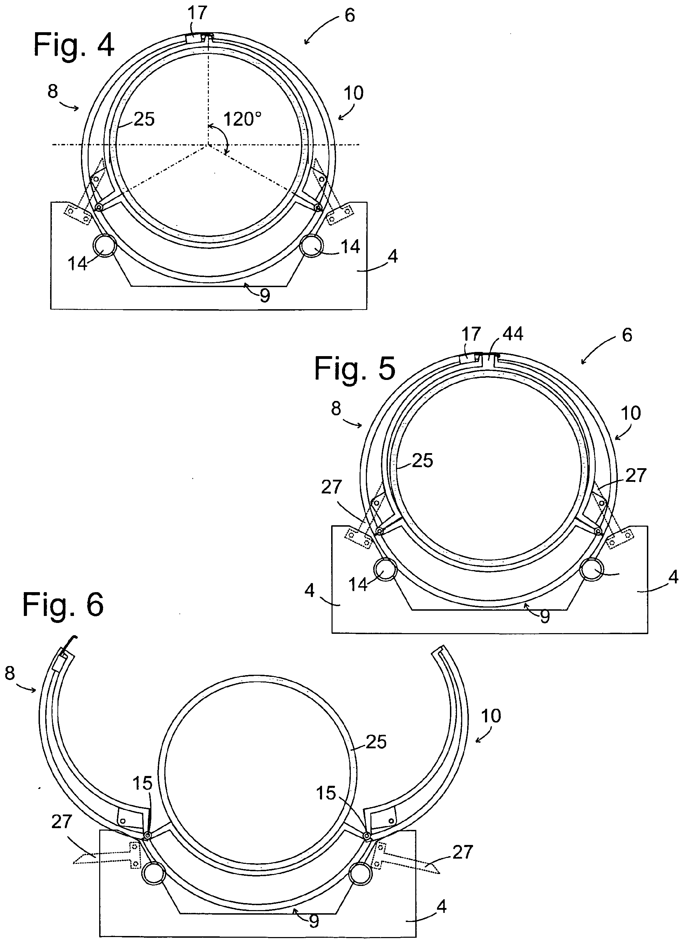

Fig. 4 zeigt einen axialen Schnitt durch die Hohlform 6 während des Verdichtens. Der Träger 1 mit dem Legekopf 3 ist aus dem inneren Hohlraum der Hohlform 6 entfernt, und die einander gegenüberliegenden Flansche 18 der Teilschalen 8, 10 sind durch das Schließwerkzeug 17 fest gegeneinander gedrückt.

Wie durch strichpunktierte Linien angedeutet, kreuzen Oberflächennormalen, die jeweils von den Rändern der Teilschalen 8, 9, 10 ausgehen, einander in der Mitte der Hohlform jeweils unter einem Winkel von 120°, und die Ebene größter Breitenausdehnung der Hohlform 6 schneidet die Teilschalen 8 und 10.

Nach dem Verdichten müssen die Hohlform 6 und das Werkstück 25 auskühlen, damit das Werkstück 25 vollends erhärten und aus der Hohlform 6 entnommen werden kann. Dabei ergibt sich das Problem, dass der Wärmeausdehnungskoeffizient des Stahls, aus dem die Hohlform 6 gefertigt ist, deutlich größer ist als der des Werkstücks 25 aus Kunststoff. Ließe man daher das Werkstück 25 und die Hohlform 6 in der in Fig. 4 gezeigten Konfiguration auskühlen, so würde entweder das Werkstück 25 die Hohlform 6 sprengen, oder es würde unter dem Druck der schrumpfenden Hohlform 6 kollabieren. Um dies zu vermeiden, wird zum Auskühlen das Schließwerkzeug 17 wie in Fig. 5 gezeigt, teilweise geöffnet, und die nach außen schwenkenden Teilschalen 8, 10 durch Kontakt mit an dem Drehgestell 4 montierten Stützarmen 27 in einer Stellung fixiert, die anhand der bekannten Wärmeausdehnungskoeffizienten der Hohlform 6 und des Werkstücks 25 so berechnet ist, dass nach dem Auskühlen das Werkstück 25 an allen drei Teilschalen 8, 9, 10 anliegt. Nach erfolgter Abkühlung werden die Stützarme 27 wieder entfernt oder, wie in Fig. 6 gezeigt, beiseite geschwenkt. Nun können die Teilschalen 8, 10 in den Scharnieren 15 soweit nach außen schwenken, dass das fertige Werkstück 25 aus der Form 6 nach oben entnommen werden kann.

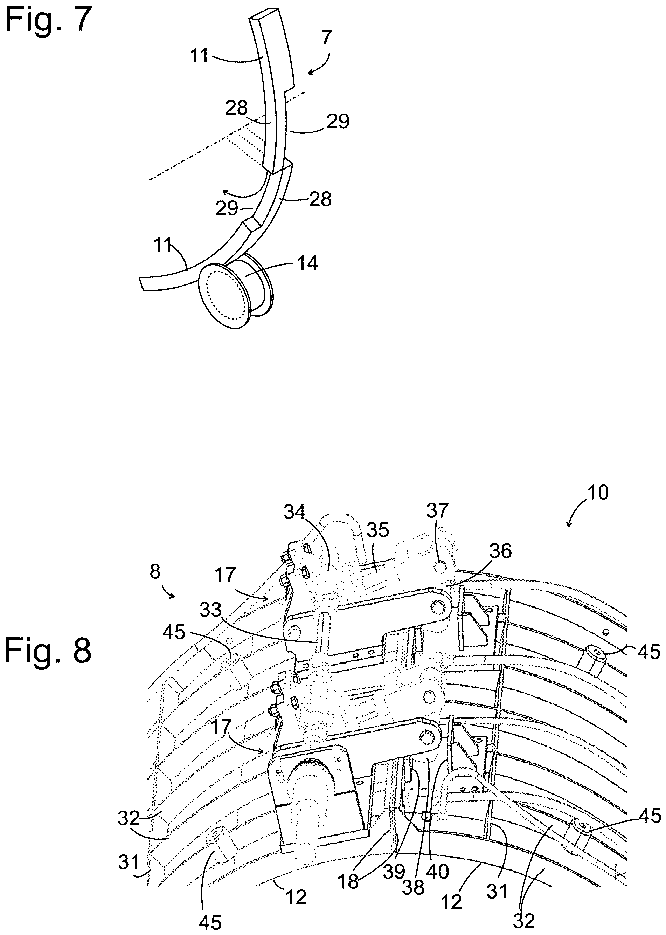

Fig. 7 zeigt ein Detail eines Laufrings 7 an der Grenze zwischen zwei seiner Sektoren 11. Während die Breite der Sektoren 11 auf einem überwiegenden Teil ihrer Länge jeweils der Breite der Rollen 14 entspricht, so dass die Laufringe 7 in axialer Richtung unbeweglich auf den Rollen 14 aufliegen, ist die Breite der Sektoren 11 an ihren einander zugewandten Enden jeweils auf die Hälfte reduziert, so dass einem Finger 28 des einen Sektors 11 eine Aussparung 29 des benachbarten Sektors 11 gegenüber liegt. Die Finger 28 überlappen geringfügig in Umfangsrichtung, so dass wenn die Hohlform 6 geschlossen ist, eine kontinuierliche, erschütterungsfreie Abrollung der Laufringe 7 auf den Rollen 14 gewährleistet ist. Wenn beim Öffnen der Hohlform 6 zwei Teilschalen um eine in Fig. 7 mit 30 bezeichnete Achse eines Scharniers 15 gegeneinander schwenken, rückt jeweils der Finger 28 des einen Sektors in die Aussparung 29 des anderen ein, wie durch einen gebogenen Pfeil in Fig. 7 verdeutlicht.

Fig. 8 zeigt eine perspektivische Ansicht von Teilen der Teilschalen 8, 10 und von diese miteinander verbindenden Schließwerkzeugen 17. Deutlich ist hier der Aufbau der Teilschalen 8, 10 mit den von den Wandplatten 12 radial nach außen abstehenden Flanschen 18 und sich in axialer Richtung beziehungsweise in Umfangsrichtung über die Außenseiten der Wandplatten 12 erstreckenden Versteifungsrippen 31, 32 zu erkennen. Die Schließwerkzeuge 17 sind über eine gemeinsame Spindel 33 verbunden und umfassen jeweils ein auf der Spindel 33 montiertes, in einem Gehäuse 34 verborgenes Zahnrad sowie eine durch das Zahnrad angetriebene Zahnstange 35. Die Zahnstange 35 ist mit einem zweiarmigen Hebel 36 über ein Gelenk 37 verbunden. In der in Fig. 8 gezeigten Konfiguration ist die Zahnstange 35 voll ausgefahren und hält eine Klaue 38, die ein von dem Gelenk 37 abgewandtes Ende des Hebels 36 bildet, gegen eine von der Teilschale 8 abgewandte Außenseite 39 des Flansches 18 der Teilschale 10 gedrückt. So sind die Flansche 18 beider Teilschalen 8, 10 fest gegeneinander gepresst, und die Hohlform 6 ist geschlossen.

Die Klaue 38 des Hebels 36 befindet sich hier in einer Ausnehmung zwischen dem Flansch 18 und einer zu dem Flansch 18 im wesentlichen parallelen Wand 40 der Teilschale 10.

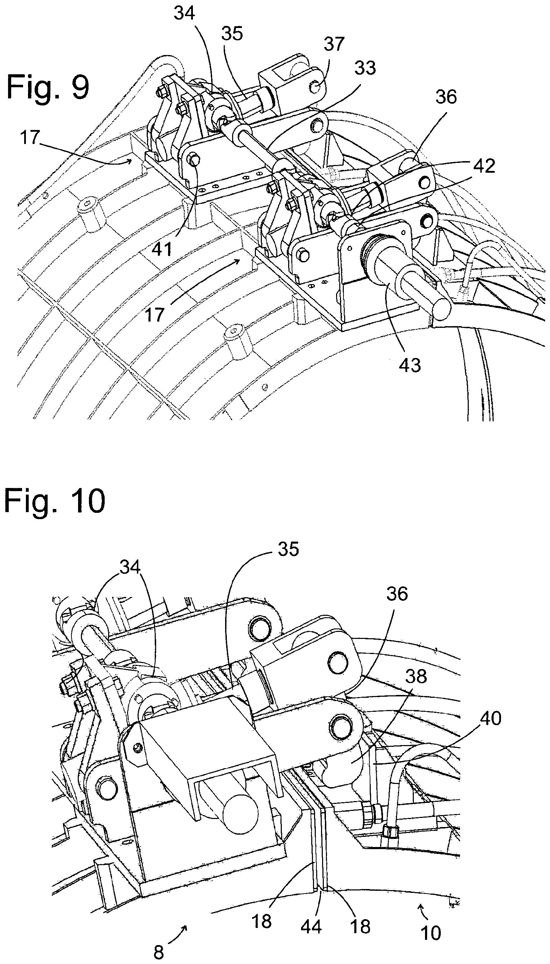

Wie aus der Ansicht der Fig. 9 deutlicher wird, sind die Zahnstange 35 und das Zahnradgehäuse 34 mit der Teilschale 8 über ein Gelenk 41 verbunden, um beim Ein- und Ausfahren der Zahnstange 35 in geringem Umfang schwenken zu können. Zum Ausgleich dieser Schwenkbewegung sind in der Spindel 33 zwei Kardangelenke 42 zwischen den Schließwerkzeugen 17 und einem die Drehung der Spindel 33 antreibenden Pneumatikmotor 43 angeordnet.

Fig. 10 zeigt die Schließwerkzeuge 17 bei teiloffener Hohlform, wie in Fig. 5 dargestellt. Die Zahnstangen 35 sind teilweise eingezogen, und die Klauen 38 sind vom Flansch 18 fort gegen die gegenüber liegende Wand 40 geschwenkt und haben diese ein Stück weit zurück gedrängt, so dass zwischen den Flanschen 18 der Teilschalen 8, 10 ein Spalt 44 offen steht. An einem weiteren Schwenken sind die Hebel 36 wie durch den in Fig. 5 gezeigten Kontakt der Teilschalen 8, 10 mit den Stützarmen 27 gehindert.

Wenn nach dem Abkühlen die Stützarme 27 entfernt sind, können die Zahnstangen 35 vollständig eingezogen werden, so dass die Hebel 36 noch weiter im Gegenuhrzeigersinn schwenken. Dadurch geht ihr Eingriff zwischen dem Flansch 18 und der Wand 40 verloren. Sie blockieren daher nicht mehr ein weiteres Aufschwenken der Hohlform 6, können dieses aber auch nicht antreiben. Um die Hohlform 6 bis in die in Fig. 6 gezeigte Konfiguration aufzuklappen, können nicht dargestellte Ösen in Schraubdome 45 der Teilschalen 8, 10 eingeschraubt sein, und ein (nicht dargestellter) Hallenkran kann nacheinander an Ösen der Teilschalen 8, 10 angekoppelt werden, um diese beiseite zu ziehen.

**Bezugszeichen**

| | | | |
|---|---|---|---|
| 1 | Trägerbalken | 30 | Achse |
| 2 | Arm | 31 | Versteifungs- |
| 3 | Legekopf | | rippe |
| 4 | Drehgestell | 32 | Versteifungs- |
| 5 | Schiene | | rippe |
| 6 | Hohlform | 33 | Spindel |
| 7 | Laufring | 34 | Gehäuse |
| 8 | Teilschale | 35 | Zahnstange |
| 9 | Teilschale | 36 | Hebel |
| 10 | Teilschale | 37 | Gelenk |
| 11 | 120°-Sektor | 38 | Klaue |
| 12 | Wandplatte | 39 | Außenseite |
| 13 | Strebe | 40 | Wand |
| 14 | Rolle | 41 | Gelenk |
| 15 | Scharnier | 42 | Kardangelenk |
| 16 | Arm | 43 | Pneumatikmotor |
| 17 | Schließwerkzeug | 44 | Spalt |
| 18 | Flansch | 45 | Schraubdom |
| 19 | Dichtung | | |
| 20 | Hohlraum | | |
| 21 | Saugleitung | | |
| 22 | Arm | | |
| 23 | Klebeband | | |
| 24 | Folie | | |
| 25 | Werkstück | | |
| 26 | Ringdichtung | | |
| 27 | Stützarm | | |
| 28 | Finger | | |
| 29 | Aussparung | | |

## Patentansprüche

1. Legemaschine für die Fertigung eines Werkstücks (25) aus Verbundmaterial, mit einer Hohlform (6) und wenigstens einem in der Hohlform (6) zum Auslegen einer Innenfläche der Hohlform (6) mit einem Materialband bewegbaren Legekopf (3), wobei die Hohlform (6) wenigstens drei Teilschalen (8, 9, 10) umfasst, die zwischen einer ersten Stellung, in der Innenflächen der Teilschalen (8, 9, 10) dicht aneinander anschließen, und einer zweiten Stellung, in der die Innenflächen von wenigstens zwei der Teilschalen (8, 10) durch einen Spalt (44) getrennt sind, bewegbar sind, und wobei mehrere Schließwerkzeuge (17) wenigstens in der ersten Stellung einander zugewandte Ränder der Teilschalen (8, 10) des wenigstens einen Paars überbrücken, wobei
- die Schließwerkzeuge (17) jeweils eine an einer der zwei beweglichen Teilschalen (8, 10) in Umfangsrichtung der Hohlform (6) verstellbare Klaue (38) aufweisen, **dadurch gekennzeichnet, dass** die Klaue (38) in der ersten Stellung gegen eine von der einen beweglichen Teilschale (8) abgewandte Oberfläche (39) der anderen beweglichen Teilschale (10) drückt und in der zweiten Stellung an einer der einen beweglichen Teilschale (8) zugewandten Oberfläche (40) der anderen beweglichen Teilschale (10) anliegt, und
- die mehreren Schließwerkzeuge (17) über eine Spindel (33) gekoppelt verstellbar sind.

2. Legemaschine nach Anspruch 1, **dadurch gekennzeichnet, dass** die wenigstens zwei bewegbaren Teilschalen (8, 10) über die zweite Stellung hinaus in eine Freigabestellung bewegbar sind, in der ein durch das Auslegen mit Verbundmaterial enthaltenes Werkstück (25) aus der Hohlform (6) obenseitig entnehmbar ist.

3. Legemaschine nach Anspruch 1 oder 2, **dadurch gekennzeichnet, dass** die wenigstens zwei bewegbaren Teilschalen (8, 10) einen oberen Bereich der Hohlform (6) bilden und mit der wenigstens einen weiteren Teilschale (9) unterhalb einer Ebene größter Querausdehnung der Hohlform (6) verbunden sind.

4. Legemaschine nach einem der vorhergehenden Ansprüche, **dadurch gekennzeichnet, dass** die Oberflächennormalen von zwei beliebigen Punkten der Innenfläche einer jeden Teilschale (8, 9, 10) einen Winkel von weniger als 180°, vorzugsweise einen Winkel von höchstens 120°, aufspannen.

5. Legemaschine nach einem der vorhergehenden Ansprüche, **dadurch gekennzeichnet, dass** zwischen dicht aneinander anschließenden Teilschalen (8, 9, 10) ein elastisches Dichtband (19) vorgesehen ist.

6. Legemaschine nach einem der vorhergehenden Ansprüche, **dadurch gekennzeichnet, dass** die Teilschalen einander paarweise gegenüberliegende Flansche aufweisen, die zwischen sich jeweils wenigstens eine evakuierbare Kammer begrenzen.

7. Legemaschine nach einem der vorhergehenden Ansprüche, **dadurch gekennzeichnet, dass** von Hohlform (6) und Legekopf (3) wenigstens eins entlang einer Achse verschiebbar und/oder um die Achse drehbar ist.

8. Legemaschine nach Anspruch 7, **dadurch gekennzeichnet, dass** Hohlform (6) und Legekopf (3) entlang der Achse gegenläufig verschiebbar und/ oder um die Achse gegenläufig drehbar sind.

9. Legemaschine nach einem der vorhergehenden Ansprüche, **dadurch gekennzeichnet, dass** die Hohlform (6) wenigstens zueinander koaxiale Laufringe (7) aufweist, die auf Laufrollen (14) eines Trägers (4) drehbar getragen sind.

10. Legemaschine nach Anspruch 9, **dadurch gekennzeichnet, dass** jeder Laufring (7) in jeweils mit einer der Teilschalen (8, 9, 10) fest verbundene Abschnitte (11) gegliedert ist.

11. Legemaschine nach Anspruch 10, **dadurch gekennzeichnet, dass** die Abschnitte (11) jedes Laufrings (7) wenigstens an ihren Enden (28, 29) axial gegeneinander versetzt sind.

12. Legemaschine nach einem der vorhergehenden Ansprüche, **dadurch gekennzeichnet, dass** ein Träger (4), auf dem die Hohlform (6) ruht, Anschläge (27) aufweist, an denen die wenigstens zwei bewegbaren Teilschalen (8, 10) in ihrer zweiten Stellung anliegen.

13. Legemaschine nach Anspruch 12, **dadurch gekennzeichnet, dass** die Anschläge (27) zum Öffnen der Hohlform (6) bewegbar oder abnehmbar sind.

14. Legemaschine nach einem der vorhergehenden Ansprüche, **dadurch gekennzeichnet dass** das Schließwerkzeug (17) gegen eine zum Aushärten des Werkstücks (25) erforderliche Temperatur beständig ist.

15. Verfahren zum Fertigen eines Werkstücks (25) aus Verbundmaterial unter Verwendung einer Hohlform (6) mit wenigstens drei Teilschalen (8, 9, 10), die zwischen einer ersten Stellung, in der Innenflächen der Teilschalen (8, 9, 10) dicht aneinander anschließen, und einer zweiten Stellung, in der die Innenflächen von wenigstens zwei der Teilschalen (8, 10) durch einen Spalt (44) getrennt sind, bewegbar sind, mit den Schritten:
- Auslegen einer Innenfläche der in der ersten Stellung befindlichen Hohlform (6) mit wenigstens einem Materialband, um ein Rohwerkstück (25) zu erhalten;
- Aushärten des Rohwerkstücks (25) durch Erhitzen in der Hohlform (6); und
- Abkühlen des Rohwerkstücks (25), während sich die Hohlform (6) in der zweiten Stellung befindet.

## Claims

1. A laying machine for the manufacture of a workpiece (25) from composite material, having a hollow mould (6) and at least one laying head (3) which can be moved within the hollow mould (6) for laying out an inner surface of the hollow mould (6) using a material belt, wherein the hollow mould (6) comprises at least three partial shells (8, 9, 10), which can be moved between a first position, in which inner surfaces of the partial shells (8, 9, 10) closely adjoin one another, and a second position, in which the inner surfaces of at least two of the partial shells (8, 10) are separated by a gap (44), and wherein a plurality of closing tools (17) bridge mutually facing edges of the partial shells (8, 10) of the at least one pair at least in the first position, wherein
- the closing tools (17) have one adjustable claw (38) in each one of the two movable partial shells (8, 10) in circumferential direction of the hollow mould (6), **characterized in that** the claw (38) in the first position presses against a surface (39) - facing away from one of the movable partial shells (8) - of the other movable partial shell (10), and in the second position rests against a surface (40) - facing the one movable partial shell (8) - of the other movable partial shell (10), and
- the plurality of closing tools (17) are adjustable in a coupled manner by means of a spindle (33).

2. The laying machine according to Claim 1, **characterized in that** the at least two movable partial shells (8, 10) can be moved beyond the second position into a release position in which a workpiece (25) obtained by laying out using composite material can be removed from the hollow mould (6) at the top.

3. The laying machine according to Claim 1 or 2, **characterized in that** the at least two movable partial shells (8, 10) form an upper region of the hollow mould (6) and are connected to the at least one further partial shell (9) below a plane of greatest transverse extent of the hollow mould (6).

4. The laying machine according to one of the preceding claims, **characterized in that** the surface normals of two arbitrary points of the inner surface of each partial shell (8, 9, 10) span an angle of less than 180°, preferably an angle of at most 120°.

5. The laying machine according to one of the preceding claims, **characterized in that** an elastic sealing strip (19) is provided between partial shells (8, 9, 10) which are closely adjacent to one another.

6. The laying machine according to one of the preceding claims, **characterized in that** the partial shells have flanges which are opposite one another in pairs and in each case between them delimit at least one chamber which can be evacuated.

7. The laying machine according to one of the preceding claims, **characterized in that** at least one of the hollow mould (6) and laying head (3) is displaceable along an axis and/or can be rotated about the axis.

8. The laying machine according to Claim 7, **characterized in that** hollow mould (6) and laying head (3) are displaceable in opposite directions along the axis and/or rotatable about the axis in opposite directions.

9. The laying machine according to one of the preceding claims, **characterized in that** the hollow mould (6) has races (7) which are at least coaxial to one another and are supported in a rotatable manner on rollers (14) of a support (4).

10. The laying machine according to Claim 9, **characterized in that** each race (7) is divided into sections (11) which are securely connected to one of the partial shells (8, 9, 10) in each case.

11. The laying machine according to Claim 10, **characterized in that** the sections (11) of each race (7) are axially offset with respect to one another at least at the ends (28, 29) thereof.

12. The laying machine according to one of the preceding claims, **characterized in that** a support (4), on which the hollow mould (6) rests, has stops (27) against which the at least two movable partial shells (8, 10) rest in the second position thereof.

13. The laying machine according to Claim 12 **characterized in that** the stops (27) can be moved or removed for opening the hollow mould (6).

14. The laying machine according to one of the preceding claims, **characterized in that** the closing tool (17) is resistant to a temperature required for hardening the workpiece (25).

15. A method for manufacturing a workpiece (25) made from composite material using a hollow mould (6) having at least three partial shells (8, 9, 10), which can be moved between a first position, in which inner surfaces of the partial shells (8, 9, 10) closely adjoin one another, and a second position, in which the inner surfaces of at least two of the partial shells (8, 10) are separated by a gap (44), having the steps:
- laying out an inner surface of the hollow mould (6) located in the first position using at least one material belt in order to obtain a raw workpiece (25);
- hardening the raw workpiece (25) by heating in the hollow mould (6); and
- cooling the raw workpiece (25) whilst the hollow mould (6) is located in the second position.

## Revendications

1. Machine de placement, destinée à fabriquer une pièce à usiner (25) en matière composite, avec un moule creux (6) et au moins une tête de placement (3) mobile dans le moule creux (6), pour le garnissage d'une surface intérieure du moule creux (6) avec une bande de matière, le moule creux (6) comprenant au moins trois coques partielles (8, 9, 10) qui sont mobiles entre une première position, dans laquelle les surfaces intérieures des coques partielles (8, 9, 10) se raccordent intimement, et une deuxième position, dans laquelle les surfaces intérieures d'au moins deux (8, 10) des coques partielles sont séparées par une fente (44), et plusieurs outils de fermeture (17) chevauchant au moins dans la première position des bords qui se font face des coques partielles (8, 10) de l'au moins une paire,
- les outils de fermeture (17) comprenant chacun une griffe (38) contre l'une des deux coques partielles (8, 10) mobiles et ajustable dans la direction périphérique du moule creux (6), **caractérisée en ce que** la griffe (38) appuie dans la première position contre une surface (39) opposée à l'une (8) des coques partielles mobiles de l'autre coque partielle (10) mobile, et dans la deuxième position est adjacente à une surface (40) de l'autre coque partielle (10) mobile, qui fait face à l'une (8) des coques partielles mobiles, et
- les plusieurs outils de fermeture (17) sont ajustables en étant couplés par l'intermédiaire d'une broche (33).

2. Machine de placement selon la revendication 1, **caractérisée en ce que** les au moins deux coques partielles (8, 10) mobiles sont mobiles au-delà de la deuxième position dans une position de libération, dans laquelle la pièce à usiner (25) obtenue par le garnissage avec une matière composite peut être retirée par la face supérieure du moule creux (6).

3. Machine de placement selon la revendication 1 ou 2, **caractérisée en ce que** deux coques partielles (8, 10) mobiles forment une région supérieure du moule creux (6) et sont assemblées avec l'au moins une coque partielle (9) supplémentaire, en-dessous d'un plan de la plus grande extension transversale du moule creux (6).

4. Machine de placement selon l'une quelconque des revendications précédentes, **caractérisée en ce que** les normales superficielles de deux points quelconques de la surface intérieure de chaque coque partielle (8, 9, 10) définissent un angle de moins de 180 °, de préférence un angle d'un maximum de 120°.

5. Machine de placement selon l'une quelconque des revendications précédentes, **caractérisée en ce qu'**entre des coques partielles (8, 9, 10) intimement adjacentes est prévue une bande d'étanchéité élastique (19).

6. Machine de placement selon l'une quelconque des revendications précédentes, **caractérisée en ce que** les coques partielles comportent des brides opposées par paire, qui délimitent entre elles respectivement au moins une chambre évacuable.

7. Machine de placement selon l'une quelconque des revendications précédentes, **caractérisée en ce que** parmi le moule creux (6) et la tête de placement (3), au moins l'un est déplaçable le long d'un axe et/ou rotatif autour de l'axe.

8. Machine de placement selon la revendication 7, **caractérisée en ce que** le moule creux (6) et la tête de placement (3) sont déplaçables en sens opposé le long de l'axe et/ou sont rotatifs en sens opposé autour de l'axe.

9. Machine de placement selon l'une quelconque des revendications précédentes, **caractérisée en ce que** le moule creux (6) comporte des bagues de roulement (7) au moins coaxiales l'une par rapport à l'autre, qui sont portées de manière rotative par des galets de roulement (14) d'un support (4).

10. Machine de placement selon la revendication 9, **caractérisée en ce que** chaque bague de roulement (7) est divisée en des parties (11) respectivement assemblées fixement avec l'une des coques partielles (8, 9, 10).

11. Machine de placement selon la revendication 10, **caractérisée en ce qu'**au moins sur leurs extrémités (28, 29), les parties (11) de chaque bague de roulement (7) sont décalées les unes par rapport aux autres.

12. Machine de placement selon l'une quelconque des revendications précédentes, **caractérisée en ce qu'**un support (4) sur lequel repose le moule creux (6) comporte des butées (27) sur lesquelles les au moins deux coques partielles (8, 10) s'appuient dans leur deuxième position.

13. Machine de placement selon la revendication 12, **caractérisée en ce que** les butées (27) sont mobiles ou amovibles, pour l'ouverture du moule creux (6).

14. Machine de placement selon l'une quelconque des revendications précédentes, **caractérisée en ce que** l'outil de fermeture (17) est résistant à une température requise pour la solidification de la pièce à usiner (25).

15. Procédé, destiné à fabriquer une pièce à usiner (25) en une matière composite en utilisant un moule creux (6) comportant au moins trois coques partielles (8, 9, 10) qui sont mobiles entre une première position, dans laquelle les surfaces intérieures des coques partielles (8, 9, 10) se raccordent intimement, et une deuxième position, dans laquelle les surfaces intérieures d'au moins deux coques partielles (8, 10) sont séparées par une fente (44), comportant les étapes :
- du garnissage d'une surface intérieure du moule creux (6) se trouvant dans la première position avec au moins une bande de matière, pour obtenir une pièce à usiner brute (25) ;
- de la solidification de la pièce à usiner brute (25) par chauffage dans le moule creux (6) ;
- du refroidissement de la pièce à usiner brute (25), pendant que le moule creux (6) se trouve dans la deuxième position.
